# FASCICULE DE BREVET EUROPEEN

(11) **EP 0 946 105 B1**
(45) Date de publication et mention de la délivrance du brevet: **23.10.2002**
(21) Numéro de dépôt: 97951299.3
(22) Date de dépôt: 10.12.1997
(51) Int. Cl.: A23C 19/16, A23P 1/08

(54) **PROCEDE D'ENROBAGE POUR FROMAGES ET LES FROMAGES ENROBES OBTENUS**
VERFAHREN ZUM ÜBERZIEHEN VON KÄSE UND NACH DIESEM VERFAHREN HERGESTELLTE BESCHICHTETE KÄSE
METHOD FOR COATING CHEESE AND RESULTING COATED CHEESE

(30) Priorité: 13.12.1996 FR 9615379
(43) Date de publication de la demande: 06.10.1999
(73) Titulaire: FROMAGERIES BEL, 75008 Paris (FR)
(72) Inventeur: GOLDSCHMIDT, Benoît, F-41000 Blois (FR); WALLERAND, Florence, F-41100 Vendome (FR)
(74) Mandataire: Bernasconi, Jean Raymond
(86) Numéro de dépôt international: FR9702260
(87) Numéro de publication internationale: WO98025477

(56) Documents cités:
- EP-A- 0 593 123
- EP-A- 0 594 258
- US-A- 4 765 996
- US-A- 4 946 694
- US-A- 5 132 125

## Description

L'invention concerne un nouveau procédé d'enrobage pour fromages et les fromages enrobés obtenus.

Pour améliorer l'apparence et la conservation des aliments, on utilise traditionnellement des emballages présentant les propriétés suivantes :
- des propriétés barrières à l'eau afin d'éviter une trop grande déshydratation du produit ;
- des propriétés de résistance mécanique suffisantes pour assurer la protection du produit.

Un enrobage comestible offrant des caractéristiques mécaniques et barrières identiques aux emballages traditionnels, mais qui pourrait être consommé et qui éviterait ainsi l'accumulation de déchets, représente un intérêt majeur.

Le caractère comestible de ces enrobages impose les propriétés suivantes :
- ne pas conférer de faux goût et présenter un goût le plus neutre possible ;
- être peu perceptible en texture ou présenter une texture agréable, fondante ;
- présenter un toucher le moins gras possible.

De nombreux films et enrobages comestibles pour protéger les produits alimentaires sont connus.

On les distingue selon leur structure.

Les enrobages comestibles sont des structures formées directement sur les aliments à partir de matériaux filmogènes utilisés sous forme liquide. Les films comestibles sont des structures indépendantes préformées sans le support de l'aliment.

Les matériaux de base utilisés pour la fabrication de films ou enrobages comestibles peuvent être classés en trois catégories :
- les polyosides, qui possèdent de bonnes propriétés filmogènes. En raison de la nature hydrophile de ces molécules, les films constituent des barrières efficaces aux huiles et matières grasses mais leurs propriétés barrières à l'eau sont médiocres. On peut citer à titre d'exemples de films réalisés à partir de ces composants, ceux décrits dans les brevets WO 93/06752 et EP 0 542 510 à base d'amidon, dans le brevet EP 429 817 à base de gels d'alginates, dans le brevet EP 0 547 783 à base de carraghénanes.
- les protéines : les propriétés barrières de ces films sont voisines de celles des films réalisés à partir de polyosides, d'où des propriétés barrières à l'eau médiocres. On peut citer à titre d'exemples de films à base de protéines, ceux décrits dans le brevet EP 0 244 661 à base de collagène, dans le brevet US 3 642 498 à base de kératine, ou dans le brevet EP 0 593 123 qui fabrique un enrobage par mise en suspension et évaporation d'un mélange protéines animales (collagène, lactoprotéine, protéines d'oeuf) et agent plastifiants (polyéthytène-glycol, sorbitol, glycérol).

On a par ailleurs proposé des enrobages à base de mélanges protéines/polysaccharides. On peut citer à titre d'exemple le brevet EP 0 090 539 à base d'un mélange de gommes et de zéine auquel on a ajouté un agent plastifiant et le brevet WO 92/01394 à base de protéines (globulines, caséines, albumines, etc..) et polysaccharides (alginates, carraghénanes, gomme arabique, etc).
- les lipides : par rapport aux films protéiques et aux films à base de polyosides, les films lipidiques présentent d'excellentes propriétés barrières à l'eau mais ils posent des problèmes de stabilité (notamment vis à vis de l'oxydation), de texture (toucher gras) et de résistance mécanique. On peut citer à titre d'exemples de films à base de lipides, ceux décrits dans le brevet EP 0 464 881 à base d'huile de soja, de coton et de palme, le brevet US 5 130 150 à base d'un mélange de cires et d'huile de soja, de coton et de palme, le brevet EP 0 410 495 à base de polyesters d'acides gras, les brevets US 4 569 847 et 4 567 047 à base d'un mélange de fromage en poudre hyperlipidique, de beurre à haut point de fusion, de stéarine et d'un émulsifiant.

D'autre part, afin d'associer les propriétés barrières à l'eau des composants lipidiques aux propriétés mécaniques des composants protéiques ou à base de polyosides, il a été décrit et mis au point des structures composites associant ces deux types de constituants.

Une première structure connue est un enrobage composite dont le mode de fabrication est basé sur la réalisation d'une émulsion (suspension ou dispersion des constituants non miscibles).

Les films composites obtenus par émulsion sont décrits dans de nombreux brevets. On peut citer à titre d'exemples, le brevet US 3 653 925 à base de gluten (protéines) et de lipides, le brevet EP 0 208 791 à base de beurre à haut point de fusion, de maltodextrine, de lactosérum, de lactose et d'un émulsifiant, le brevet EP 0 471 558 à base d'une émulsion de protéines ou de polysaccharides et de lipides avec un émulsifiant, le brevet EP 0 547 551 à base d'une émulsion d'amidon modifié, de gélatine, d'eau, de lipides et d'un émulsifiant.

De même, le brevet EP 0 594 258 décrit un enrobage à base de protéines et de matières grasses laitières émulsionnées, avec des sels de fonte, et le brevet EP 0 451 491 décrit un enrobage à base d'une émulsion d'isolats de protéines laitières et de lipides saturés utilisés comme couche barrière dans les pizzas.

Cependant, les propriétés barrières de l'émulsion sont insuffisantes pour une bonne conservation du produit et l'obtention de durée de vie longues. En outre, l'incorporation de matières grasses au sein du réseau protéique affaiblit sa résistance et affaiblit par conséquence ses propriétés mécaniques. De plus, l'application d'enrobages sous forme d'émulsions confère au produit un toucher gras peu agréable au contact des doigts.

Une deuxième structure connue est un film composite dont le mode de fabrication est basé sur la réalisation à plat de structures multicouches préformées avant application.

On peut citer par exemple le brevet WO 87/03453 qui décrit la réalisation d'un film par application successive de deux couches d'un film composite réalisé par dispersion de méthylcellulose, d'hydroxy-propyl-cellulose et de cires ou d'acides gras comestibles dans un solvant à base d'éthanol, le brevet WO 86/00501 qui décrit la réalisation d'un film selon deux modes possibles : une première couche constituée d'un dérivé de cellulose ou de protéine dissous dans un solvant et séché, et une deuxième couche lipidique ou une première couche constituée d'une émulsion suivie d'une deuxième couche lipidique.

Bien entendu, le mode de fabrication de ces films affecte leurs propriétés barrières à la vapeur d'eau, la réalisation de films multicouches préformés étant celle qui donne les meilleurs résultats.

Ainsi, par exemple, on a pu comparer les propriétés barrières à la vapeur d'eau de films constitués par du gluten seul, par une émulsion gluten/cire et par une bicouche gluten/cire.

Pour une épaisseur de 0,060 mm, le film de gluten a une perméabilité à la vapeur d'eau de 1,05 (g.mm/m²/j/mm Hg) à 30°C, celui à base d'une émulsion a une perméabilité de 0,18 à 30°C, pour une épaisseur de 0,120 mm et le film bicouche a une propriété barrière de 0,005 pour 0,020 mm d'épaisseur (B. CUQ-Emballage Digest- oct. 1994, p. 38).

Par ailleurs, les propriétés requises pour un enrobage comestible dépendent du produit alimentaire à enrober. Dans le cas de la présente invention, le produit à enrober est un fromage, dont l'extrait sec est de préférence inférieur à 65 % et qui présente de préférence une activité de l'eau supérieure à 0,95.

Ces caractéristiques intrinsèques aux fromages imposent des propriétés barrières à l'eau particulières.

La Demanderesse a présentement découvert un procédé d'enrobage de fromages consistant à appliquer directement sur le fromage à enrober successivement au moins une couche d'une composition comestible filmogène hydrophobe, et au moins une couche d'une composition comestible filmogène hydrophile, un agent émulsifiant étant présent dans la couche hydrophobe adjacente à une couche hydrophile, la couche hydrophile adjacente à une couche hydrophobe ou à l'interface entre une couche hydrophobe et une couche hydrophile.

Ces couches sont appliquées directement sur le fromage par des techniques de trempage, de pulvérisation ou de nappage par passage sous un rideau tombant, suivies d'un séchage, sans préformage préliminaire de films.

La pulvérisation est réalisée de manière avantageuse par un procédé sans air (propulsion du liquide par pression hydraulique) pour éviter la formation de "neige" au contact de l'air utilisé dans les systèmes de pulvérisation par air comprimé.

Un mode préféré de réalisation du procédé selon l'invention est caractérisé en ce qu'on effectue successivement les étapes suivantes:
a) appliquer à l'état fondu une composition hydrophobe sur le fromage à enrober ;
b) laisser la couche formée se solidifier ;
c) éventuellement répéter les étapes a) et b) avec des compositions hydrophobes identiques ou différentes ;
d) appliquer sur la ou les couches formées une solution aqueuse d'une composition hydrophile ;
e) laisser sécher la couche de composition hydrophile ;
f) éventuellement répéter les étapes d) et e) avec des solutions de compositions hydrophiles identiques ou différentes.

Quel que soit le procédé utilisé, la température d'application de la couche grasse est avantageusement comprise entre 30°C et 70°C (selon composition grasse utilisée) de telle sorte que toute la matière grasse soit à l'état liquide.

La température d'application de la solution hydrophile est telle qu'elle n'entraîne pas de fusion des couches grasses sous-jacentes. soit préférentiellement une température intérieure à 40°C.

Le séchage du fromage enrobé est effectué de manière préférentielle à une température comprise entre 15 et 35°C et une hygrométrie comprise entre 30 et 50%.

La ou les couches hydrophobes au contact du produit assurent les propriétés barrières à la vapeur d'eau et la ou les couches hydrophiles extérieures assurent les propriétés mécaniques et évitent tout toucher gras.

La ou les couches hydrophobes identiques ou différentes sont constituées par des lipides. Plus particulièrement, on peut choisir les lipides parmi les matières grasses végétales et animales, préférentiellement les matières grasses laitières, qui permettent de limiter les défauts sensoriels, seules ou en mélange.

La ou les couches hydrophobes sont constituées préférentiellement par des lipides caractérisés par un indice de matière grasse solide (SFI : Solid Fat Index) compris entre 35 et 75 %, préférentiellement entre 42 et 70 %, à 5°C et entre 5 et 50 %, préférentiellement entre 8 et 41 %, à 25°C.

De manière avantageuse, la ou les couches hydrophobes sont constituées par des matières grasses d'origine laitière se caractérisant par un indice de matière grasse solide compris entre 52 et 55 % à 5°C et 20 à 34 % à 25°C.

Le choix des composants de cette couche est particulièrement important dans la mesure où les matières grasses retenues doivent présenter des caractéristiques de cristallisation adaptées pour obtenir à la fois une cristallisation rapide et une bonne plasticité afin de limiter les craquèlements, et assurer ainsi une couverture homogène nécessaire à la protection du produit.

Ces propriétés physiques peuvent être obtenues en jouant sur les propriétés physiques de la composition grasse employée.

Ces caractéristiques sont avantageusement obtenues par le mélange de matière grasse à bas point de fusion et de matières grasses à haut point de fusion. Un mélange parfaitement approprié est constitué de matière grasse anhydre ayant un point de fusion compris entre 0 et 30°C (correspondant à une teneur en MG solide d'environ 50 % à 5°C et d'environ 11 % à 25°C) et d'une matière grasse anhydre de point de fusion compris entre 35 et 45°C (correspondant à une teneur en MG solide d'environ 66 % à 5°C et d'environ 37 % à 25°C) dans un rapport compris entre 25/75 et 50/50.

La ou les couches hydrophobes sont alors préparées par mélange des deux types de matières grasses dans des proportions requises et fonte du mélange à une température comprise entre 45 et 55°C.

Après fonte, le mélange a avantageusement une viscosité comprise entre 10 et 17 mPa.s. Les matières grasses utilisées sont avantageusement d'origine laitière ou d'un mélange matière grasse végétale/matière grasse laitière.

La couche lipidique peut servir de façon avantageuse de vecteur d'arômes, de colorants, de conservateurs, etc.

La ou les couches hydrophiles identiques ou différentes sont constituées soit d'un ou plusieurs composés choisis dans la famille des polyosides, soit d'un ou plusieurs composés choisis dans la famille des protéines, soit du mélange d'un ou de plusieurs composés de ces familles.

Dans la famille des polyosides, on peut citer à titre d'exemple les gommes végétales et microbiennes, l'amidon, la cellulose et ses dérivés, les alginates et les carraghénanes. L'avantage des polyosides est de limiter le caractère brillant d'une couche constituée de protéines.

Dans la famille des protéines, on peut citer à titre d'exemple, la zéine, le collagène, l'ovalbumine, les protéines de soja, la caséine, l'albumine, les globulines et la kératine.

De manière préférentielle, la couche hydrophile est constituée par des protéines d'origine animale, préférentiellement d'origine laitière.

De manière préférentielle, ces protéines d'origine laitière sont choisies parmi des caséinates, plus particulièrement le caséinate de sodium, et/ou des protéines de sérum, plus particulièrement la lactalbumine et la lactoglobuline. Lorsque la couche hydrophile est constituée par un mélange caséine/protéines du sérum, la teneur en protéine du sérum est avantageusement comprise entre 3 et 10 % de la teneur totale en protéines de la composition hydrophile.

La teneur en protéines de la solution hydrophile est avantageusement comprise entre 5 et 20%.

De manière avantageuse, on peut ajouter un agent plastifiant à la ou les couches hydrophiles afin d'en améliorer les propriétés mécaniques. Les plastifiants utilisés sont avantageusement choisis dans la famille des polyols, préférentiellement le sorbitol ou le glycérol. La teneur en plastifiant est comprise entre 1/4 et 1/2 de la teneur totale en protéines de la solution hydrophile, soit un taux compris entre 1,25 et 10 % de la composition de la solution hydrophile.

A titre d'exemple, quand la couche hydrophile est constituée de protéines d'origine laitière, on peut ajouter à celle-ci de l'amidon, dans une proportion de 3 à 5 %, pour éviter l'aspect brillant d'un film protéique.

La solution filmogène obtenue a une viscosité comprise entre 0,03 et 0,05 Pa.s à 35°C.

Cette couche hydrophile superficielle peut être avantageusement un support d'ingrédients (poivre, amandes, noix, céréales), soit pour apporter un contraste de texture, soit comme élément de décoration ou support de conservateur arômes, etc.

Un agent émulsifiant est incorporé à la couche hydrophobe adjacente à une couche hydrophile, à la couche hydrophile adjacente à une couche hydrophobe ou à l'interface entre une couche hydrophobe et une couche hydrophile, constituant une couche intermédiaire. Cet agent émulsifiant a pour fonction l'adhésion entre les couches hydrophobes et hydrophiles.

La teneur en agent émulsifiant est préférentiellement choisie entre 0,5 et 3 % de la composition et, de préférence encore, entre 1 et 3 % de la composition. Cet agent émulsifiant est choisi de préférence dans la famille des esters diacétyle tartrique de monoglycérides et les monoglycérides distillés. Tout autre émulsifiant approprié fait partie du domaine de l'invention.

Selon un premier mode de réalisation de l'invention, l'enrobage est constitué d'une seule couche hydrophobe et d'une seule couche hydrophile. Un agent émulsifiant est incorporé à l'une ou l'autre des couches.

Selon un deuxième mode de réalisation de l'invention, l'enrobage est composé de deux couches hydrophobes et d'une couche hydrophile. Un agent émulsifiant est alors incorporé à l'une ou l'autre des deux dernières couches, de préférence dans la couche hydrophobe adjacente à la couche hydrophile.

Ce choix de dépôt d'une seconde couche hydrophobe sur la première a pour avantage de permettre de combler les microfissures de la première couche hydrophobe entraînées par les irrégularités de la surface du produit. Cette seconde couche hydrophobe aura une composition similaire ou différente de la première couche quant à l'origine et aux propriétés des matières grasses employées.

Selon un troisième mode préféré de réalisation de l'invention, l'enrobage est constitué d'au moins une couche hydrophobe, d'une couche intermédiaire composée d'un émulsifiant et d'une couche supérieure hydrophile.

Le procédé d'enrobage selon l'invention peut être appliqué à tout type de fromages.

Par "fromage", on entend aussi bien des produits définis par la législation sous le terme fromages que les produits laitiers commercialisés sous d'autres appellations et pouvant contenir des composants non laitiers tels que des matières premières végétales ou animales (produits camés). Les fromages fondus sont inclus dans le domaine de l'invention.

Le procédé d'enrobage selon l'invention convient pour tout type de fromages quel que soit leur format et leur grammage. Toutefois, il est particulièrement approprié pour l'enrobage de fromages de petit grammage (entre 5 et 50 g) qui sont ensuite regroupés dans un sachet, un emballage "flow-pack". une boîte ou tout autre emballage approprié.

L'enrobage selon l'invention sera mieux compris à l'aide des exemples ci-après données à titre illustratif et non limitatif.

### EXEMPLE 1

On prépare un premier mélange hydrophobe (1) de composition suivante :
- 71 % d'une matière grasse laitière anhydre à point de fusion compris entre 35 et 45°C,
- 27 % d'une matière grasse laitière anhydre à point de fusion compris entre 0 et 35°C,
- 2 % d'un émulsifiant, l'ester diacétyle tartrique de monoglycérides.

On fait fondre le mélange de matières grasses à 50°C sous faible agitation. On ajoute l'émulsifiant après fusion et on maintient le mélange 15 minutes à 50°C sous agitation rapide.

Parallèlement, on prépare un mélange hydrophile (2) composé de 10 % (soit 66,7 % en extrait sec) de caséinate de sodium, 5 % (33,3 % en extrait sec) de sorbitol et le complément sous forme d'eau. Le caséinate est dissous dans l'eau à 30°C dans un cutter Stephan sous agitation et sous vide à 900 t/min pendant 15 minutes.

On ajoute le sorbitol et on homogénéise le mélange par agitation et sous vide à 900 t/min pendant 10 minutes.

L'enrobage d'un fromage à pâte pressée de 20g se fait par trempage dans le bain de la composition (1) maintenue à 50°C selon deux cycles de trempage séparés permettant chacun un dépôt de matière d'environ 20 mg au cm² et terminés par une phase de cristallisation à 14°C pendant 2 minutes, et dans la solution (2) maintenue à 30°C. Le produit enrobé est mis à sécher pendant 15 minutes dans une étuve régulée à 30°C et 40 % de taux d'humidité. L'enrobage protéique ainsi formé a une épaisseur comprise entre 20 et 30 µm.

Les fromages enrobés sont regroupés par 10 et conditionnés sous "flow-pack", l'enrobage ainsi obtenu est quasiment imperceptible en bouche.

### EXEMPLE 2

1) On prépare un premier mélange hydrophobe constitué de 100 % de matière grasse laitière anhydre ayant une plage de fusion comprise entre 35 et 45°C. Cette matière grasse est fondue à 50°C sous faible agitation. Le mélange fondu est maintenu à cette température sous faible agitation. L'application sur un fromage de type pâte pressée de 10 g est réalisée par pulvérisation à l'aide d'un système de pulvérisation sans air (équipement NORDSON avec système de réchauffage du circuit de pulvérisation, débit de matière grasse environ 2,55 kg/h ; angle de dispersion de la buse de pulvérisation = 80°).
   La pulvérisation est réalisée sur la première face du fromage par passage sous la buse de pulvérisation. La cristallisation de ce premier dépôt est réalisée à 14°C pendant deux minutes. Le fromage est ensuite retourné et la même opération est conduite pour couvrir la seconde face du fromage.
2) Parallèlement, on prépare une deuxième couche hydrophobe composée d'un mélange de 97,5 % d'une matière grasse laitière anhydre ayant une plage de fusion de 0 à 35°C et de 2,5 % d'un monoglycéride IMWITOR 595 (HULS) à point de fusion 70°C, qui sert d'émulsifiant.
   La matière grasse est fondue à 40°C au bain-marié sous faible agitation. Après fusion totale, la matière grasse est portée à 70°C sous faible agitation. On ajoute l'émulsifiant et on maintient le mélange à 70°C sous agitation rapide 15 minutes minimum. L'application sur le fromage est réalisée à 70°C en deux étapes, comme décrit en 1).
3) On réalise une couche hydrophile composée d'un mélange de 13 % de caséinate de sodium (LACTOBRETAGNE) (78 % en matière sèche) et de 3,5 % de glycérol (21,22 % en matière sèche) et d'eau en quantité suffisante.

Le caséinate est dissous dans de l'eau à 30°C dans un cutter Stephan sous agitation 900 t/min et sous vide pendant 15 minutes.

On ajoute le glycérol et on homogénéise le mélange par agitation à 900 t/min, sous vide pendant 10 minutes. L'application sur la première face du fromage est réalisée par pulvérisation à l'aide d'un système de pulvérisation sans air (équipement NORDSON identique à celui utilisé pour le dépôt des couches grasses). Le séchage est réalisé en étuve à une température de 35°C et un taux d'hygrométrie de 40 % pendant 15 minutes. Après retournement du fromage, la solution filmogène est appliquée sur la seconde face dans les conditions identiques à celles décrites précédemment.

L'enrobage ainsi obtenu est quasiment imperceptible en bouche.

### EXEMPLE 3

On réalise une première couche hydrophobe composée d'un mélange de 10 % de triglycérides à base d'huile de palme ayant un point de fusion compris entre 56 et 60°C, de 88 % de matière grasse laitière anhydre à plage de fusion 0 à 35°C et de 2 % de monoglycéride de marque IMWITOR 595 (HLS) ayant un point de fusion de 70°C, qui sert d'émulsifiant.

Le mélange de matières grasses est fondu à 70°C au bain-marie sous faible agitation. Après fusion totale, on ajoute l'émulsifiant et on maintient le mélange à 70°C sous agitation rapide pendant 15 minutes minimum.

On applique une première couche sur du fromage de type pâte pressée de 40 g par trempage instantané du produit dans le bain de matières grasses à 70°C. La cristallisation s'effectue à 10°C, pendant 2 minutes, on applique une seconde couche par trempage instantané, du fromage dans le bain de matières grasses à 70°C. La cristallisation s'effectue à 10°C pendant 2 minutes. Chaque trempage permet le dépôt d'environ 20 mg de matière grasse par cm² de fromage.

On réalise une troisième couche composée d'un mélange de 10 % de caséinate de sodium (LACTOBRETAGNE) (62,5 % en extrait sec) de 5 % de sorbitol (31,25 % en extrait sec) et de 1 % d'amidon de maïs (ROQUETTE) (6,25 % en extrait sec).

Le caséinate et l'amidon sont dissous dans de l'eau portée à 30°C dans un cutter Stephan sous agitation à 900 t/min sous vide pendant 15 minutes. On ajoute du sorbitol et on homogénéise le mélange par agitation à 900 t/min sous vide pendant 10 minutes. On sèche le mélange en étuve à 30°C et 40 % de taux d'humidité. L'enrobage hydrophile résultant a une épaisseur d'environ 30 µm.

Les produits sont conditionnés dans un étui.

L'enrobage ainsi obtenu est quasiment imperceptible en bouche. Il présente un aspect mat.

### EXEMPLE 4

On réalise une première couche hydrophobe composée d'un mélange de 71 % de matière grasse laitière anhydre ayant un point de fusion compris entre 35 et 45°C, de 27 % de matière grasse laitière anhydre à plage de fusion de 0 à 35°C et de 2,5 % d'ester diacétyle tartrique de monoglycérides qui sert d'émulsifiant.

Le mélange de matières grasses est fondu à 50°C au bain-marie sous faible agitation.

Après fusion totale, on ajoute un émulsifiant et on maintient le mélange à 50°C sous agitation rapide 15 minutes minimum.

On l'applique sur un fromage de type pâte pressée de 10 g par trempage instantané dans le bain de matières grasses à 50°C. La cristallisation s'effectue à 14°C pendant 2 minutes.

Le dépôt résultant est d'environ 20 mg de matière grasse par cm² de fromage.

On réalise une seconde couche hydrophile composée de 10 % de caséinate de sodium, 5 % de protéine sérique (ALACEN 472 NEW ZEALAND MILK PRODUCT), 9 % de sorbitol et de l'eau (qsp 100 %).

Le caséinate et les protéines sériques sont dissous dans de l'eau à 25°C dans un cutter Stephan sous vide sous agitation à 900 t/min pendant 10 minutes. Il est refroidi à 30°C sous agitation et sous vide. Le mélange est porté à 75°C sous agitation à 900 t/min sous vide pendant 10 minutes. Il est refroidi à 30°C sous agitation sous vide.

Le plastifiant est ajouté, le tout est homogénéisé sous vide, sous agitation à 900 t/min pendant 15 minutes. Le mélange est appliqué par trempage instantané du fromage dans un bain à 30°C.

On l'applique par trempage instantané des fromages dans le bain maintenu à 30°C.

Les fromages ainsi enduits sont roulés dans des éléments figurés en surface du fromage, créant ainsi un contraste de texture avec la pâte fromagère.

Ces éléments figurés peuvent être un mélange de noix de cajou concassées et des graines de sésame. On sèche en statique la couche protéique à 7°C au réfrigérateur et on conditionne les produits enrobés sous sachets.

L'enrobage ainsi obtenu est quasiment imperceptible en bouche.

### EXEMPLE 5

On réalise un fromage fondu par fonte à 90°C d'un mélange de fromages, de beurre et poudre de lait en présence de 3 % de polyphosphates de sodium auquel on confère une forme de billes de 20 g par passage à 30°C sur une machine à diaphragme, par exemple celle commercialisée par la société RHEON.

Les modes de préparation des couches hydrophobes et hydrophiles sont celles décrites dans l'exemple 3.

Les billes de fromage fondu sont enrobées d'une couche hydrophobe par un premier trempage à 70°C dans un bain composé de la couche hydrophobe, cette dernière étant constituée d'un mélange à 10 % de triglycérides d'huile de palme ayant un point de fusion compris entre 56 et 60°C, de 88 % de matière grasse laitière anhydre à une plage de fusion de 0°C à 35°C et 2 % de monoglycérides de marque IMWITOR 595 (commercialisée par la société HULS) ayant un point de fusion de 70°C. La cristallisation s'effectue à 10°C pendant deux minutes.

Ce premier trempage est suivi par un deuxième trempage dans un bain constitué de la couche hydrophile composée de 10 % de caséinate de sodium (Lactobretagne) à 62,5 % d'extrait sec, de 5 % de sorbitol (Roquette) à 31,25 % d'extrait sec et de 1 % de maïs (Roquette). Le produit enrobé est mis à sécher en étuve à une température de 30°C et une hygrométrie de 40 %. Les billes de fromage enrobées sont conditionnées dans un sachet.

### EXEMPLE 6

Le nouvel enrobage comestible selon l'invention présente d'excellentes propriétés barrières à l'eau.

Le tableau comparatif ci-après permet de bien comprendre les avantages de l'enrobage selon la présente invention en terme de perte en eau (exprimée en g d'eau/100 g de produit) d'un fromage après 15 jours de conservation réfrigérée (7°C, et taux d'humidité compris entre 50 et 60 %).

A cet effet, on compare un produit sans enrobage, un produit enrobé par une émulsion composée de caséinate de sodium (50 %), de sorbitol (25 %) et de matières grasses laitières anhydres (MGLA) à point de fusion compris entre 0 et 35 °C (25 %), avec un produit recouvert d'un enrobage selon les formulations des exemples 1 à 4.

| Composition de l'enrobage | Produit enrobé | Perte en eau (en poids par rapport au produit) |
|---|---|---|
| Produit sans enrobage | Fromage type pâte pressée (20 g) | 30 - 40 % |
| selon l'exemple 1 | Fromage type pâte pressée (20 g) | 0,2 - 0,4 % |
| selon l'exemple 1 | Fromage fondu (20 g) | 1,5 - 2 % |
| selon l'exemple 2 | Fromage type pâte pressée (20 g) | 0,3 - 0,5 % |
| selon l'exemple 3 | Fromage type pâte pressée (20 g) | 1,5 - 2 % |
| selon l'exemple 4 | Fromage type pâte pressée (20 g) | 0,2 - 0,4 % |
| Enrobage émulsionné | Fromage type pâte pressée (20 g) | 25 - 30 % |

Les résultats indiqués dans le tableau indiquent clairement les avantages de l'enrobage selon l'invention sur la conservation des fromages et leurs pertes en eau comparativement à un enrobage émulsionné et à un fromage sans enrobage.

### EXEMPLE 7

Le nouvel enrobage comestible selon l'invention présente d'excellentes propriétés mécaniques.

Les propriétés mécaniques sont déterminées sur des films coulés à plats en boîtes de Pétri à partir de la solution protéique décrite à l'exemple 1 et séchés à température ambiante une nuit. Les films ainsi obtenus sont conditionnés 24 heures minimum à 20°C, 75 % d'hygrométrie avant épreuve de traction et de pénétrométrie dont les résultats sont donnés dans les tableaux ci-dessous :

**Tableau 1**

| Caractéristiques de pénétrométrie des films à base de caséinate de sodium cités ci-dessus | | | | |
|---|---|---|---|---|
| Composition en matière sèche | Epaisseur du film (µm) | Charge à la rupture (N) | Déformation à la rupture (mm) | Module d'élasticité (N/mm) |
| Caséinate de sodium : 66,7% Sorbitol : 33,3 % | 100 | 39,4 ± 1,3 | 6,5 ± 0,07 | 9,5 ± 0,6 |

**Tableau 2**

| Caractéristiques en traction des films à base de caséinate de sodium cités ci-dessus | | | | |
|---|---|---|---|---|
| Composition en matière sèche | Epaisseur du film (µm) | Charge à la rupture (N) | Déformation à la rupture (mm) | Module d'élasticité (N/mm) |
| Caséinate de sodium : 66,7 % Sorbitol : 33,3 % | 100 | 30 ± 0,1 | 46,7 ± 1,57 | 0,6 ± 0,1 |

## Revendications

1. Procédé d'enrobage de fromages consistant à appliquer directement sur le fromage à enrober successivement au moins une couche d'une composition comestible hydrophobe, et au moins une couche d'une composition comestible filmogène hydrophile, un agent émulsifiant étant présent dans la couche hydrophobe adjacente à une couche hydrophile, la couche hydrophile adjacente à une couche hydrophobe ou à l'interface entre une couche hydrophobe et une couche hydrophile.

2. Procédé d'enrobage de fromages selon la revendication 1, **caractérisé en ce que** la ou les couches hydrophobes et la ou les couches hydrophiles sont appliquées successivement sur le fromage à enrober directement par trempage, pulvérisation ou nappage.

3. Procédé d'enrobage de fromages selon l'une des revendications 1 ou 2, consistant à:
a) appliquer à l'état fondu une composition hydrophobe sur le fromage à enrober ;
b) laisser la couche formée se solidifier ;
c) éventuellement répéter les étapes a) et b) avec des compositions hydrophobes identiques ou différentes ;
d) appliquer sur la ou les couches formées une solution aqueuse d'une composition hydrophile ;
e) laisser sécher la couche de composition hydrophile ;
f) éventuellement répéter les étapes d) et e) avec des solutions de compositions hydrophiles identiques ou différentes.

4. Procédé d'enrobage selon la revendication 3, **caractérisé en ce que** le séchage du fromage enrobé est effectué à une température comprise entre 15 et 35°C et une hygrométrie comprise entre 30 et 50 %.

5. Procédé d'enrobage de fromages selon l'une quelconque des revendications précédentes, **caractérisé en ce qu'**on applique sur le fromage à enrober une seule couche hydrophobe et une seule couche hydrophile.

6. Procédé d'enrobage de fromages selon l'une quelconque des revendications précédentes, **caractérisé en ce qu'**on applique sur le fromage à enrober deux couches hydrophobes identiques ou différentes et une couche hydrophile.

7. Procédé d'enrobage de fromages selon l'une quelconque des revendications précédentes, **caractérisé en ce que** l'agent émulsifiant est contenu dans la couche hydrophile adjacente à une couche hydrophobe ou la couche hydrophobe adjacente à une couche hydrophile avec une teneur de 0,5 à 3 %.

8. Procédé d'enrobage de fromages selon l'une quelconque des revendications précédentes, **caractérisé en ce qu'**on applique une couche intermédiaire constituée par un agent émulsifiant avec une teneur de 0,5 à 3 % à l'interface entre une couche hydrophobe et une couche hydrophile.

9. Procédé d'enrobage de fromages selon l'une quelconque des revendications précédentes, **caractérisé en ce que** la couche hydrophobe, ou au moins une des couches hydrophobes, est constituée de matières grasses d'origine animale ou végétale.

10. Procédé d'enrobage de fromages selon la revendication 9, **caractérisé en ce que** la couche hydrophobe, ou au moins une des couches hydrophobes, est constituée de matières grasses d'origine laitière.

11. Procédé d'enrobage de fromages selon l'une quelconque des revendications précédentes, **caractérisé en ce que** la couche hydrophobe, ou au moins une des couches hydrophobes est constituée d'un mélange dans un rapport 25/50 à 50/75 d'une première matière grasse à point de fusion compris entre 35 et 45°C et d'une deuxième matière grasse à point de fusion compris entre 0 et 30°C.

12. Procédé d'enrobage de fromages selon l'une quelconque des revendications précédentes, **caractérisé en ce que** la couche hydrophobe, ou au moins une des couches hydrophobes est constituée d'un mélange de matières grasses végétales et de matières grasses d'origine laitière.

13. Procédé d'enrobage de fromages selon l'une quelconque des revendications précédentes, **caractérisé en ce que** les matières grasses constituant une couche hydrophobe à appliquer sont fondues à une température comprise entre 30 et 70°C, préférentiellement 45°C et 55°C.

14. Procédé d'enrobage de fromages selon l'une quelconque des revendications précédentes, **caractérisé en ce que** la couche hydrophile, ou au moins une des couches hydrophiles, est constituée par un ou plusieurs polyosides.

15. Procédé d'enrobage de fromages selon l'une quelconque des revendications précédentes, **caractérisé en ce que** la couche hydrophile, ou au moins une des couches hydrophiles, est constituée par une ou plusieurs protéines d'origine animale ou végétale.

16. Procédé d'enrobage de fromages selon l'une quelconque des revendications précédentes, **caractérisé en ce que** la couche hydrophile, ou au moins une des couches hydrophiles, est constituée par un mélange d'un ou plusieurs polyosides avec une ou plusieurs protéines d'origine animale ou végétale.

17. Procédé d'enrobage de fromages selon l'une quelconque des revendications 14 et 15, **caractérisé en ce qu'**au moins une protéine contenue dans la couche hydrophile, ou au moins une des couches hydrophiles, est d'origine laitière.

18. Procédé d'enrobage de fromages selon l'une quelconque des revendications précédentes, **caractérisé en ce que** la couche hydrophile, ou au moins une des couches hydrophiles, contient un caséinate.

19. Procédé d'enrobage de fromages selon l'une quelconque des revendications précédentes, **caractérisé en ce que** la couche hydrophile, ou au moins une des couches hydrophiles, contient un agent plastifiant en quantité égale de 25 à 100 % de celle des autres composés de la solution hydrophile filmogène.

20. Procédé d'enrobage de fromages selon la revendication 19, **caractérisé en ce que** l'agent plastifiant est un polyol.

21. Procédé d'enrobage de fromages selon l'une quelconque des revendications précédentes, **caractérisé en ce que** la couche hydrophile, ou au moins une des couches hydrophiles, est une solution contenant 5 à 20 % de composés hydrophiles et 1,25 à 10 % d'agent plastifiant.

22. Fromages enrobés suseptibles d'être obtenus par le procédé d'enrobage selon les revendications 1 à 21.

## Patentansprüche

1. Verfahren zum Überziehen von Käse, das darin besteht, daß direkt auf den zu überziehenden Käse nacheinander wenigstens eine Schicht aus einer eßbaren hydrophoben Zusammensetzung und wenigstens eine Schicht aus einer hydrophilen, filmbildenden eßbaren Zusammensetzung aufgebracht wird, wobei in der einer hydrophilen Schicht benachbarten hydrophoben Schicht, in der einer hydrophoben Schicht benachbarten hydrophilen Schicht oder an der Trennfläche zwischen einer hydrophoben Schicht und einer hydrophilen Schicht ein Emulgator vorhanden ist.

2. Verfahren zum Überziehen von Käse nach Anspruch 1, **dadurch gekennzeichnet, daß** die hydrophobe Schicht oder die hydrophoben Schichten und die hydrophile Schicht oder die hydrophilen Schichten auf den zu überziehenden Käse nacheinander direkt durch Eintauchen, Aufsprühen oder Beschichten aufgebracht werden.

3. Verfahren zum Überziehen von Käse nach einem der Ansprüche 1 oder 2, das darin besteht, daß man
a) auf den zu überziehenden Käse eine hydrophobe Zusammensetzung in geschmolzenem Zustand aufbringt,
b) die gebildete Schicht festwerden läßt,
c) gegebenenfalls die Schritte a) und b) mit gleichen oder verschiedenen hydrophoben Zusammensetzungen wiederholt,
d) auf die gebildete Schicht bzw. die gebildeten Schichten eine wässrige Lösung einer hydrophilen Zusammensetzung aufbringt,
e) die Schicht aus hydrophiler Zusammensetzung trocknen läßt,
f) eventuell die Schritte d) und e) mit Lösungen von gleichen oder verschiedenen hydrophilen Zusammensetzungen wiederholt.

4. Verfahren zum Überziehen nach Anspruch 3, **dadurch gekennzeichnet, daß** die Trocknung des überzogenen Käses bei einer Temperatur zwischen 15 und 35°C und einer Feuchtigkeit zwischen 30 und 50% durchgeführt wird.

5. Verfahren zum Überziehen von Käse nach einem der vorhergehenden Ansprüche, **dadurch gekennzeichnet, daß** man auf den zu überziehenden Käse eine einzige hydrophobe Schicht und eine einzige hydrophile Schicht aufbringt.

6. Verfahren zum Überziehen von Käse nach einem der vorhergehenden Ansprüche, **dadurch gekennzeichnet, daß** man auf den zu überziehenden Käse zwei gleiche oder verschiedene hydrophobe Schichten und eine hydrophile Schicht aufbringt.

7. Verfahren zum Überziehen von Käse nach einem der vorhergehenden Ansprüche, **dadurch gekennzeichnet, daß** der Emulgator in der einer hydrophoben Schicht benachbarten hydrophilen Schicht oder in der einer hydrophilen Schicht benachbarten hydrophoben Schicht mit einem Gehalt von 0,5 bis 3% enthalten ist.

8. Verfahren zum Überziehen von Käse nach einem der vorhergehenden Ansprüche, **dadurch gekennzeichnet, daß** man an der Trennfläche zwischen einer hydrophoben Schicht und einer hydrophilen Schicht eine Zwischenschicht aufbringt, die aus einem Emulgator mit einem Gehalt von 0,5 bis 3% besteht.

9. Verfahren zum Überziehen von Käse nach einem vorhergehenden Ansprüche, **dadurch gekennzeichnet, daß** die hydrophobe Schicht oder wenigstens eine der hydrophoben Schichten aus Fetten tierischen oder pflanzlichen Ursprungs besteht.

10. Verfahren zum Überziehen von Käse nach Anspruch 9, **dadurch gekennzeichnet, daß** die hydrophobe Schicht oder wenigstens eine der hydrophoben Schichten aus von Milch stammenden Fetten besteht.

11. Verfahren zum Überziehen von Käse nach einem der vorhergehenden Ansprüche, **dadurch gekennzeichnet, daß** die hydrophobe Schicht oder wenigstens eine der hydrophoben Schichten aus einer Mischung aus einem ersten Fett mit einem Schmelzpunkt zwischen 35 und 45°C und aus einem zweiten Fett mit einem Schmelzpunkt zwischen 0 und 30°C in einem Verhältnis von 25/50 bis 50/75 gebildet werden.

12. Verfahren zum Überziehen von Käse nach einem der vorhergehenden Ansprüche, **dadurch gekennzeichnet, daß** die hydrophobe Schicht oder wenigstens eine der hydrophoben Schichten aus einer Mischung aus pflanzlichen Fetten und Milchfetten gebildet werden.

13. Verfahren zum Überziehen von Käse nach einem der vorhergehenden Ansprüche, **dadurch gekennzeichnet, daß** die eine aufzubringende hydrophobe Schicht bildenden Fette bei einer Temperatur zwischen 30 und 70°C, vorzugsweise 45°C und 55°C, geschmolzen werden.

14. Verfahren zum Überziehen von Käse nach einem der vorhergehenden Ansprüche, **dadurch gekennzeichnet, daß** die hydrophile Schicht oder mindestens eine der hydrophilen Schichten von einem oder mehreren Polyosiden gebildet wird.

15. Verfahren zum Überziehen von Käse nach einem der vorhergehenden Ansprüche, **dadurch gekennzeichnet**, daß'die hydrophile Schicht oder wenigstens eine der hydrophilen Schichten aus einem oder mehreren Proteinen tierischen oder pflanzlichen Ursprungs gebildet werden.

16. Verfahren zum Überziehen von Käse nach einem der vorhergehenden Ansprüche, **dadurch gekennzeichnet, daß** die hydrophile Schicht oder wenigstens eine der hydrophilen Schichten aus einer Mischung aus einem oder mehreren Polyosiden mit einem oder mehreren Proteinen tierischen oder pflanzlichen Ursprungs gebildet wird.

17. Verfahren zum Überziehen von Käse nach einem der Ansprüche 14 und 15, **dadurch gekennzeichnet, daß** wenigstens ein in der hydrophilen Schicht oder wenigstens einer der hydrophilen Schichten enthaltenes Protein von Milch stammt.

18. Verfahren zum Überziehen von Käse nach einem der vorhergehenden Ansprüche, **dadurch gekennzeichnet, daß** die. hydrophile Schicht oder wenigstens eine der hydrophilen Schichten ein Caseinat enthält.

19. Verfahren zum Überziehen von Käse nach einem der vorhergehenden Ansprüche, **dadurch gekennzeichnet, daß** die hydrophile Schicht oder wenigstens eine der hydrophilen Schichten einen Weichmacher in einer Menge von 25 bis 100% der Menge der anderen Verbindungen der filmbildenden hydrophilen Lösung enthält.

20. Verfahren zum Überziehen von Käse nach Anspruch 19, **dadurch gekennzeichnet, daß** der Weichmacher ein Polyol ist.

21. Verfahren zum Überziehen von Käse nach einem der vorhergehenden Ansprüche, **dadurch gekennzeichnet, daß** die hydrophile Schicht oder wenigstens eine der hydrophilen Schichten eine Lösung ist, die 5 bis 20% hydrophile Verbindungen und 1,25 bis 10% Weichmacher enthält.

22. Überzogener Käse, der nach dem Überzugsverfahren nach den Ansprüchen 1 bis 21 erhältlich ist.

## Claims

1. Method for coating cheeses consisting of applying directly onto the cheese to be coated successively at least one layer of a hydrophobic edible composition and at least one layer of a hydrophillic film-forming edible composition, an emulsifying agent being present in the hydrophobic layer adjacent to a hydrophillic layer, the hydrophillic layer adjacent to a hydrophobic layer or at the interface between a hydrophobic layer and a hydrophillic layer.

2. Method for coating cheeses according to claim 1, **characterized in that** the hydrophobic layer or layers and the hydrophillic layer or layers are applied successively onto the cheese to be coated directly by dipping, spraying or topping.

3. Method for coating cheeses according to either of claims 1 or 2, consisting of:
a) applying a hydrophobic composition in the molten state onto the cheese to be coated;
b) allowing the layer formed to solidify;
c) optionally repeating the steps a) and b) with identical or different compositions;
d) applying an aqueous solution of a hydrophillic composition onto the layer or layers formed;
e) allowing the layer of hydrophillic composition to dry;
f) optionally repeating the steps d) and e) with solutions of identical or different hydrophillic compositions.

4. Coating method according to claim 3, **characterized in that** drying of the coated cheese is performed at a temperature of between 15 and 35°C and a relative humidity of between 30 and 50 %.

5. Method for coating cheeses according to any one of the preceding claims, **characterized in that** a single hydrophobic layer and a single hydrophillic layer are applied to the cheese to be coated.

6. Method for coating cheeses according to any one of the preceding claims, **characterized in that** two identical or different hydrophobic layers and one hydrophillic layer are applied to the cheese to be coated.

7. Method for coating cheeses according to any one of the preceding claims, **characterized in that** the emulsifying agent is contained in the hydrophillic layer adjacent to a hydrophobic layer or the hydrophobic layer adjacent to a hydrophillic layer in a concentration of 0.5 to 3 %.

8. Method for coating cheeses according to any one of the preceding claims, **characterized in that** an intermediate layer consisting of an emulsifying agent in a concentration of 0.5 and 3 % is applied at the interface between a hydrophobic layer and a hydrophillic layer.

9. Method for coating cheeses according to any one of the preceding claims, **characterized in that** the hydrophobic layer or at least one of the hydrophobic layers, consists of fats of animal or vegetable origin.

10. Method for coating cheeses according to claim 9, **characterized in that** the hydrophobic layer or at least one of the hydrophobic layers, consists of fats of milk origin.

11. Method for coating cheeses according to any one of the preceding claims, **characterized in that** the hydrophobic layer or at least one of the hydrophobic layers, consists of a mixture in a 25/50 to 50/75 ratio of a first fat with a melting point of between 35 and 45°C and a second fat with a melting point of between 0 and 30°C.

12. Method for coating cheeses according to any one of the preceding claims, **characterized in that** the hydrophobic layer or at least one of the hydrophobic layers, consists of a mixture of vegetable fats and fats of milk origin.

13. Method for coating cheeses according to any one of the preceding claims, **characterized in that** the fats constituting a hydrophobic layer to be applied are melted at a temperature of between 30 and 70°C, preferably 45°C and 55°C.

14. Method for coating cheeses according to any one of the preceding claims, **characterized in that** the hydrophillic layer or at least one of the hydrophillic layers, consists of one or more polysaccharides.

15. Method for coating cheeses according to any one of the preceding claims, **characterized in that** the hydrophillic layer or at least one of the hydrophillic layers, consists of one or more proteins of animal or vegetable origin.

16. Method for coating cheeses according to any one of the preceding claims, **characterized in that** the hydrophillic layer or at least one of the hydrophillic layers, consists of a mixture of one or more polysaccharides with one or more proteins of animal or vegetable origin.

17. Method for coating cheeses according to either of claims 14 or 15, **characterized in that** at least one protein contained in the hydrophillic layer, or at least one of the hydrophillic layers, is of milk origin.

18. Method for coating cheeses according to any one of the preceding claims, **characterized in that** the hydrophillic layer or at least one of the hydrophillic layers, contains a caseinate.

19. Method for coating cheeses according to any one of the preceding claims, **characterized in that** the hydrophillic layer or at least one of the hydrophillic layers, contains a plasticizing agent in a quantity equal to 25 to 100 % of that of the other compounds of the film-forming hydrophillic solution.

20. Method for coating cheeses according to claim 19, **characterized in that** the plasticizing agent is a polyol.

21. Method for coating cheeses according to any one of the preceding claims, **characterized in that** the hydrophillic layer or at least one of the hydrophillic layers, is a solution containing 5 to 20 % hydrophillic compounds and 1.25 to 10 % of a plasticizing agent.

22. Coated cheeses that can be obtained by the coating method according to claims 1 to 21.
